# EUROPEAN PATENT SPECIFICATION

(11) **EP 2 987 822 B1**
(45) Date of publication and mention of the grant of the patent: **30.08.2017**
(21) Application number: 14461563.0
(22) Date of filing: 23.08.2014
(51) Int. Cl.: C08J 11/08, B29B 17/02, C09D 9/00, B41M 7/00

(54) **A method for recovering polymer from printed PETG substrates**
Verfahren zur Rückgewinnung von Polymer aus bedruckten PETG-Substraten
Procédé pour la récupération de polymères à partir de substrats de PETG imprimés

(43) Date of publication of application: 24.02.2016
(73) Proprietor: Nicrometal S.A., 87-100 Torun (PL); POLITECHNIKA WARSZAWSKA, 00-661 Warszawa (PL); Zachodniopomorski Uniwersytet Technologiczny w Szczecinie, 70-310 Szczecin (PL); Centrum Badan i Rozwoju Technologii dla Przemyslu S.A., 00-132 Warszawa (PL)
(72) Inventor: Piesowicz, Elzbieta, 70-310 Szczecin (PL); Boczkowska, Anna, 00-661 Warszawa (PL); Latko, Paulina, 00-661 Warszawa (PL); Putynkowski, Grzegorz, 00-132 Warszawa (PL); Przetakiewicz, Wojciech, 00-132 Warszawa (PL); Paszkiewicz, Sandra, 70-310 Szczecin (PL); Roslaniec, Zbigniew, 70-310 Szczecin (PL); Gawdzinska, Katarzyna, 00-132 Warszawa (PL); Zielinski, Jacek, 87-100 Torun (PL)
(74) Representative: Kancelaria Eupatent.pl Sp. z.o.o

(56) References cited:
- EP-A1- 0 930 349
- US-B1- 6 223 904

## Description

### TECHNICAL FIELD

The present invention relates to a method for recovering polymer form printed PETG (dimethylcyclohexyl glycol modified poly(ethylene terephthalate) substrates. More specifically, the invention relates to a method for continuous recovering thermoplastic polymer form printed thin-walled PETG substrates such as foils. The polymer material (PETG) is recovered by treatment of the foil in a liquid medium. The printed substrates may comprise pigments or dyes, which are removed such as to recover neat PETG. The invention further relates to a method for modification of recovered PETG.

### BACKGROUND

In recent years, increasing demand for plastic products, especially products for domestic and industrial usage, resulted in a rapid growth of quantity of polymeric waste, which induced development of methods for recycling plastic articles.

Thin-walled waste articles made of thermoplastic polymers, e.g. foils or containers such as plates, cups or bottles which are not covered with print inks, are relatively easily recyclable. Recycling of such plastic materials typically involves separation of the waste products due to the type of polymer substrate, then the separated products are melted and granulated to be re-used as raw material for production of new plastic products.

In turn, thermoplastic thin-walled products with printing, such as printed foils and containers, require removal of the print substances before re-granulation, to avoid contamination of the polymer matrix by the print ingredients. Existence of print ingredients in polymer matrix as contaminant could further lead to deterioration of processing properties of recovered raw polymer material.

A process for removing print form plastic substrate should provide quick and complete removal of print without harming the substrate. Nonetheless, selection of proper solvent or solvents composition may constitute a serious problem, especially when the polymer partially or completely depolymerizes during treatment. Moreover, stripping chemicals may be harmful to the environment and may have special disposal requirements, which may further constitute a serious problem in case of using large quantities of the chemicals which leads to additional production costs.

A US patent US5634405 discloses a method for removing an ink from substrate containing synthetic polymer resins such as polyethylene, polypropylene, polycarbonate, polyamide and poly(ethylene terephthalate) by means of using an aqueous solution of glycol ether i.e. 2-ethoxyethanol and ethylene glycol monoethylene ether; the solution containing from 60% to 99% ether glycol by weight. The method of de-inking the polymer substrate comprises cutting the polymer substrate with obtaining a polymer scrap, mixing the polymer scrap with the aqueous solution of glycol ether which provides substantially ink-free resin, removing the solution and recycling post-process treating solution by distillation, thus, enabling reuse of the treating glycol ether solution.

A PCT application WO2012/151291 discloses compositions and a method for removal an ink image from plastic substrates and particularly plastic cups being intended for use with food and beverage products. The method comprises the steps of treating the polymer cups, by using a mechanical scrubbing device, with the nontoxic, low volatile solvent which is capable of weakening the adherence of the ink to the container surface as well as solving the ink. The solvent is selected from the group of alcohols, alkyl esters, ketones, glycols, glycol ethers or halogenated solvents, wherein the solvent may comprise a surfactant to assist the de-inking process.

A US patent US7416612 discloses a method and compositions for removal of paint form plastic substrate such as nylon, thermoplastic polyolefins, polyphenylene oxide, polyamide, polyphenylene ether or thermoplastic polyurethanes. The method includes the steps of cutting the plastic substrate for scrap followed by immersing and agitating the scrap in delamination solutions of different temperatures, respectively. The treating solution consists of benzyl alcohol, glycolic acid, anionic surfactant, 2-mercaptobenzothioazl, wherein after treating with the solution, the substrate is rinsed and dried.

A US patent US6223904 discloses a method for recovering raw material from coated foils made of thermoplastic such as poly(ethylene terephthalate) (PET) as well as the composition for treating the coated foil. The used solvent working in alkaline range consists of one or more organic surfactant or salts thereof, one or more organic solvents or water and, if required a catalyst. Treatment of the foil shreds is carried out at room temperature. The delamination composition is mechanically recycled by settling out and centrifugation, and then it is turned back to the process.

It follows from the above-mentioned publications that it is common to utilize harmful solvents or complex chemical compositions, which are difficult to be recovered because of multiplicity of composition components. In particular, there is no safe method available for recovering polymer from printed PETG substrates.

Therefore, there is a need to develop a safe method for removing print substances form PETG substrates, without harming the polymer so that PETG can be effectively re-used.

### SUMMARY

There is presented a method for recovering polymer from printed PETG substrates, comprising the steps of: providing a printed PETG substrate with the print layer comprising pigments and/or dyes dispersed in a binder matrix, chopping the substrate into irregular strips and, treating the chopped substrate with a treating composition, wherein the treating composition is an aqueous azeotrope of an organic low molecular weight, polar solvent selected from the group consisting of ketones, aldehydes, alcohols and esters.

Preferably, the solvent is an aliphatic having from 1 to 7 carbon atoms in each alkyl moiety.

Preferably, the solvent is selected from the group consisting of acetone, ethanol, propanol, methylethylketone and ethyl acetate.

Preferably, the strips have width of no more than 5 cm.

Preferably, the treating process is carried out at ambient temperature.

Preferably, the treating step is carried out for 20 minutes.

Preferably, the treating step is repeated from 3 to 5 times.

Preferably, the polymer is dried and granulated after the treating step.

Preferably, PETG granulate is heated at a temperature 10-15°C lower than the melting temperature of the polymer for 5-24 hours, in vacuum of range of 15-1 hPa.

Preferably, PETG granulate is heated at a temperature 10-15°C higher than the melting temperature of the polymer and mixed with an adduct of epoxy peroxide carbon nanotube, wherein the adduct is represented by the formula (I).

The presented method seeks to avoid use of complex chemical compositions by using a simple solvent composition which can be recovered in environmentally friendly, low cost manner and which can be reused in the process, leading to reduction of generated organic solvent waste. Further, the presented method related to modification of recovered poly(ethylene terephthalate glycol) (PETG).

### BRIEF DESCTRIPTION OF DRAWINGS

The method is presented by means of exemplary embodiments and shown in a drawing, wherein:
Fig. 1 is a schematic flowchart of an example of a process;
Fig. 2 is a scheme of reaction of preparing an adduct to be used as an additive to the recovered polymer.

### DETAILED DESCRIPTION

A method for removing print from printed thermoplastic PETG substrates is presented herein. The substrates are preferably thin-walled substrates, such as thin-walled containers, cups or plates, in particular foils.

The treating composition used in the presented method is an aqueous azeotrope of an organic polar solvent having low molecular weight, selected from the group consisting of ketones, aldehydes, alcohols and esters. Water in the composition can be either distilled water or demineralized water. The treating composition can be applied to the substrate by any suitable method, e.g. by rubbing, agitating, mixing or dipping the chopped substrate in the treating composition. It has been unexpectedly discovered that the aqueous azeotropic mixtures of above-mentioned polar solvents can be used to effectively remove a variety of printing compositions, without the necessity of addition of any auxiliary caustic compound such as acid, base as well as catalyst and highly hazardous chemicals such as aromatic solvents. Aqueous azeotropic mixtures of ketones, aldehydes, alcohols or esters are capable of removing substances utilized in any type of printing techniques upon the polymeric substrates without adversely affecting the polymer (e.g. prompting depolymerization of polymer backbones). In addition, the used azeotropic mixtures are sufficiently volatile so as to be removed from the polymer substrate without unnecessary energy outlay. A simple comprisal of the treating composition facilitates recovery of the composition after treatment of the chopped polymer substrate. According to the method of the invention, the post-process treating mixture, after the treating process, is recovered simply by distillation, wherein only simple apparatus is needed as the azeotropic composition after distillation keeps the same percentages of particular treating composition compounds.

The printed polymeric PETG substrates, from which the print substances can be removed, may constitute any kind of polymeric waste e.g. post-industrial waste, domestic waste and the like.

The print to be removed can be the print applied by any suitable printing technology e.g. flexography printing, inkjet printing, laser/toner printing, intaglio printing, screen-printing, rotogravure printing and the like. The printing compositions can be any print suitable for use in these printing methods. The printing compositions may comprise dyes or pigments or mixtures thereof. The pigments or dyes can be dispersed in uncrosslinked or crosslinked binder matrix. Exemplary of binder systems capable for being removed according to the method are styrene acrylic copolymers, or polyamides.

The printed polymeric substrate is preferably foil, or a thin-walled waste article e.g. containers or plates chopped into irregular strips of width less than 5 cm. The applicant has unexpectedly discovered that shape and dimensions of the chopped polymeric substrate both have of great importance for the efficiency of polymer recovery process when the substrate is mixed or agitated with the treating composition. Irregularly strip-hopped polymeric substrate of width less than 5 cm causes formation of larger areas of empty spaces throughout the treating composition can act to remove the print of polymeric substrate.

As set out above, the treating composition constitute the aqueous azeotropic mixture of organic, low molecular weight, polar solvent selected from the group consisting of ketones, aldehydes, alcohols and esters. Preferably said solvents are aliphatic compounds having from 1 to 7 carbon atoms in each alkyl moiety, more preferably from 1 to 5 carbon atoms in each alkyl moiety, and the most preferably from 1 to 3 carbon atoms in each alkyl moiety. Exemplary organics solvents which can be used, according to the present invention, are acetone, ethanol, propanol, methylethylketone and ethyl acetate. Generally, each aqueous azeotropic composition of above mentioned solvents can be used as the treating composition.

Preferably, solvents used according to the invention are halogen-free solvents as well as they do not contain aromatic moieties.

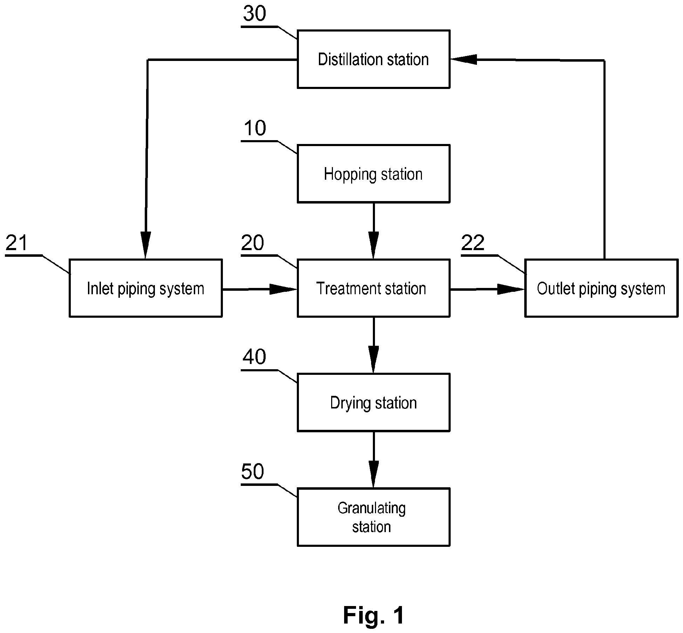

Exemplary embodiment of treating method according to the invention is schematically shown in the Fig. 1. The polymer to be recovered from the printed polymeric substrate, for example a waste PETG foil, is chopped into irregular strips of width less than 5 cm at the chopping station 10, e.g. a cutter mill. The chopped irregular substrate strips enter a reactor chamber at the treating station 20 by means of a suitable conveyor device (not shown in Fig. 1 for clarity). An inlet piping system 21 delivers the treating composition to the reaction chamber at the treating station 20. In the reaction chamber, the chopped polymer substrate is treated by mixing, or otherwise contacting the chopped substrate with the treating composition, e.g., an aqueous azeotropic ethanol composition or an aqueous azeotropic propanol composition or an aqueous azeotropic acetone composition or an aqueous azeotropic methylethylketone composition or an aqueous azeotropic ethyl acetate composition. The treatment is preferably carried out by mixing, but it can be carried out by rubbing or agitating or dipping the substrate in the treating composition as well.

The print-free polymer can be separated from the treating composition using any suitable mean. For example, the post-process treating composition can be pumped out from the reactor chamber by using an outlet piping system 22 connected to the reactor. The post-process treating composition can be further recycled by a simple distillation process. In Fig. 1 a closed-looped system is shown, wherein the processed treating composition is passed via the distillation station 30 and then it is returned to the reactor chamber as a recovered treating composition. The process for recovering the polymer from the printed plastic substrate can be implemented in either a bath or in a continuous manner. The process can be repeated from 3 to 5 times to ensure complete print removal from the chopped substrate. For example, a plurality of reactor chambers may be arranged in series, so that the chopped polymer can be removed from the first reactor chamber and then it can be introduced into the second reactor chamber for contacting with another volume of the treating composition and so on. Alternatively, the chopped polymer substrate can be maintained in the same reactor chamber while new volumes of treating composition can be input to the reaction chamber after pumping out the post-process treating composition. The new portion of treating composition may be the same treating composition as used in previous treatment process, or the new portion of treating composition may be provided as different treating composition of different organic solvent. For example, an aqueous azeotropic ethanol composition may be used as the first treating composition, and an aqueous ethyl acetate composition may be used as the second treating composition.

The post-process treating composition may pumped out and distilled after 5 - 10 cycles of polymer treating, and then the composition may be re-introduced e.g. to the last reactor chamber of the series of reactor chambers to be re-used in the treating process.

As shown in Fig. 1, the recovered polymer can be further processed to provide recycled product, e.g. the recovered polymer may be dried at a drying station 40, then plasticized and granulated at station 50. For example, granulate of PETG can be obtained at station 50 in the step of plasticizing PETG at a temperature 180 - 250°C followed by molding of plasticized PETG to obtain a rod shape or a strand of diameter of 2 - 5 mm, then cooling the polymer to a of 25-15°C followed by cutting the rods or the strands into granulate.

The PETG granulate thus obtained may be used as a raw material for production of new plastic articles or the granulate may be further modified.

The modification of the recovered PETG is carried out by addition an additive to the polymer. The additive is represented by formula I shown in Fig. 3.

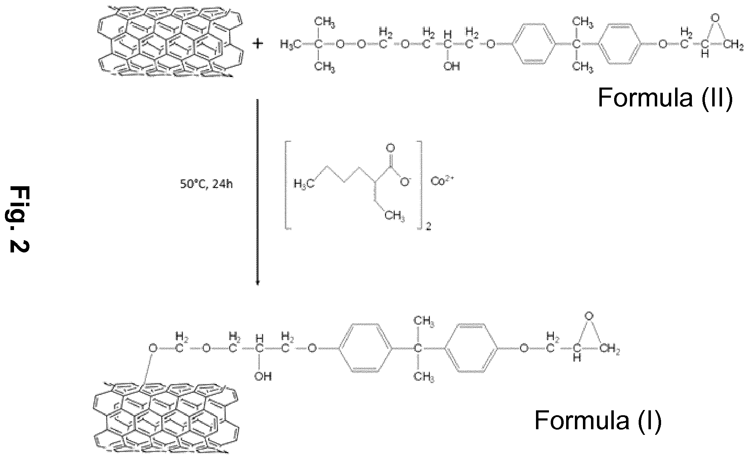

The additive of formula I consists an adduct compound of epoxy peroxide carbon nanotubes. In Fig. 2 the process for preparation of the adduct compound is shown wherein the carbon nanotubes undergo addition to the epoxy peroxide represented by formula II.

The adduct-forming reaction is conducted at 50°C, by 24 hours in the presence of catalyst in amount of tetrabuthyl titanate, antimone oxide etc. Preferably, the catalyst is cobalt salt of alpha-methyl caproic acid. Prior to being added with the adduct, in order to improve of PETG performance and physical properties which have deteriorated during recovering process of the polymer, the polymer (PETG) is heated at the temperature 10 - 15 °C lower than the polymer melting temperature, by 5 - 24 hours, in vacuum of 15 - 1 hPa; in an alternative embodiment, treating of the PETG granulate can be carried out at the temperature 10 - 15 °C higher than the polymer melting temperature. After temperature treatment, the polymer is plasticized and mixed with the adduct in weight ratio of 99,5:0,5 to 99:1. Alternatively, the adduct can be added to melted polymer granulate without any additional treatment. Addition of the adduct to polymer materials can be affect their higher viscosity and higher thermal stability

PETG modified with the adduct of carbon nanotubes with epoxy peroxide as well as the mixture of the modified PETG and PET (poly(ethylene terephthalate)) may be further processed using any known technology to produce new plastic articles.

Below there are presented non-limiting examples of carrying out the presented method.

### EXAMPLE I

PETG foil was chopped into irregular strips by a guillotine provided with rolls 2 meters long. The frizzy strips having a width of about 5 cm were introduced to a chamber provided with a wire basket, a stirrer and a hermetic cover. Then, the treating composition consisting of acetone and water in volume ratio of 90:10 has been input to the chamber. The mixture was mixed by 20 min at an ambient temperature. The stirring direction was changed every 5 min. Next, the cover was removed and a wire basket filled with the polymeric foil strips was removed from the chamber. The recovered polymer strips were then transported to an air dryer and dried to be subsequently used in other process.

### EXAMPLE II

PETG foil with intense amount of printing was chopped into irregular strips by a guillotine provided with 2 meter long rolls. The frizzy strips of width of 4 cm entered a chamber provided with a wire basket, an anchor stirrer and a hermetic cover. Next, the treating composition consisting of ethanol and water in a volume ratio of 94:6 was added to the chamber. The mixture was mixed by 20 min at ambient temperature. The stirring direction was changed every 5 min. Next, the cover was removed and the wire basket filled with the polymeric foil strips were removed from the chamber. The wire basket was transported to the other container of the same dimensions as the dimensions of wire basket, wherein the treated polymer was rinsed by mixing with rinsing liquid by 20 min. Rinsing was repeated five times, then the recovered polymer strips were transported to an air dryer and dried to be subsequently used in other process.

### EXAMPLE III

After treatment, recovered PETG foil strips were dried and visually assessed. Then the foil strips were introduced to the container being an extension of a feeder of counter-rotating twin screw extruder. There was provided, in the extruder chamber, two-parts screw-conveyor having one smaller and one larger screw; the foil strips were pressed into the extruder chamber. The plasticizing zone and the homogenizing zone of the extruder were heated to the temperature of 180-250°C. Rotary screws speed was set to 30 revolutions per minute. The extruder was provided with additional feeder for feeding extruded material with additional components concentrate. Further, the extruders were provided with degassing vacuum system. Titanium white in the amount of 2% by weight and the adduct of epoxy peroxide carbon nanotubes in the amount of 0,5% by weight were provided by the additional feeder to the screw-conveyor chamber to be mixed with the plasticized PETG. The plasticized mass was extruded as strands of 3 mm diameter. Then the polymeric strands were cooled in a water bath and the cooled polymer was granulated by cutting into scraps of 3 mm length. The granulate was dried under vacuum conditions at 50°C for 8 hours, to be subsequently processed by injection molding to produce new articles.

### EXAMPLE IV

After treatment process, the recovered PETG foil strips were dried and visually assessed. Then the foil strips were introduced to a container being an extension of a feeder of counter-rotating twin screw extruder. There was provided, in the extruder chamber, two-parts screw-conveyor having one smaller and one larger screw; the foil strips were pressed into the extruder chamber. The plasticizing zone and homogenizing zone of extruder were heated to the temperature of 180-250°C. Rotary screws speed was set to 30 revolutions per minute. The extruder was provided with additional feeder for feeding extruded material by additional components concentrate. The plasticized mass was extruded into strands of diameter of 2 mm. Then the polymeric strands were cooled in the water bath and cooled polymer was granulated by cutting into scraps of 2 mm long. The obtained transparent polymeric granulate was dried and decrystalized under vacuum at 50°C for 5 hours. Afterwards, polycondensation of the polymer was conducted at 180°C for 12 hours under vacuum of 5hPa, while mixing the polymer by means of repouring. The treated granulate was subsequently used in a foil production process.

## Claims

1. A method for recovering polymer from printed dimethylcyclohexyl glycol modified poly(ethylene terephthalate) (PETG) substrates, comprising the steps of:
- providing a printed PETG substrate with the print layer comprising pigments and/or dyes dispersed in a binder matrix;
- chopping the substrate into irregular strips; and
- treating the chopped substrate with a treating composition;
- wherein the treating composition is an aqueous azeotrope of an organic low molecular weight, polar solvent selected from the group consisting of ketones, aldehydes, alcohols and esters.

2. The method according to claim 1, wherein the solvent is an aliphatic having from 1 to 7 carbon atoms in each alkyl moiety.

3. The method according to claim 2 wherein the solvent is selected from the group consisting of acetone, ethanol, propanol, methylethylketone and ethyl acetate.

4. The method according to claim 1 wherein the strips have width of no more than 5 cm.

5. The method according to any of preceding claims, wherein the treating process is carried out at ambient temperature.

6. The method according to any of preceding claim wherein the treating step is carried out for 20 minutes.

7. The method according to any of preceding claim wherein the treating step is repeated from 3 to 5 times.

8. The method according to any of preceding claim, wherein the polymer is dried and granulated after the treating step.

9. The method according to claim 8 wherein PETG granulate is heated at a temperature 10-15°C lower than the melting temperature of the polymer for 5-24 hours, in vacuum of range of 15-1 hPa.

10. The method according to claim 8 wherein PETG granulate is heated at a temperature 10-15°C higher than the melting temperature of the polymer and mixed with an adduct of epoxy peroxide carbon nanotube, wherein the adduct is represented by the formula (I).

## Patentansprüche

1. Verfahren zur Rückgewinnung eines Polymers aus mit gedrucktem Dimethylcyclohexylglykol modifizierten Poly(ethylenterephthalat)-(PETG)-Substraten, umfassend die folgenden Schritte:
- Bereitstellen eines gedruckten PETG-Substrats, wobei die Druckschicht Pigmente und/oder Farbstoffe umfasst, die in einer Bindemittelmatrix dispergiert sind;
- Zerhacken des Substrats in unregelmäßige Streifen; und
- Behandeln des zerhackten Substrats mit einer Behandlungszusammensetzung;
- wobei die Behandlungszusammensetzung ein wässriges Azeotrop eines organischen, polaren Lösungsmittels mit niedrigem Molekulargewicht, ausgewählt aus der Gruppe, bestehend aus Ketonen, Aldehyden, Alkoholen und Estern, ist.

2. Verfahren nach Anspruch 1, wobei das Lösungsmittel ein Aliphat ist, das in jeder Alkylgruppierung 1 bis 7 Kohlenstoffatome aufweist.

3. Verfahren nach Anspruch 2, wobei das Lösungsmittel aus der Gruppe ausgewählt ist, bestehend aus Aceton, Ethanol, Propanol, Methylethylketon und Ethylacetat.

4. Verfahren nach Anspruch 1, wobei die Streifen eine Breite von höchstens 5 cm aufweisen.

5. Verfahren nach einem der vorhergehenden Ansprüche, wobei der Behandlungsprozess bei Umgebungstemperatur ausgeführt wird.

6. Verfahren nach einem der vorhergehenden Ansprüche, wobei der Behandlungsschritt 20 Minuten lang ausgeführt wird.

7. Verfahren nach einem der vorhergehenden Ansprüche, wobei der Behandlungsschritt 3-bis 5-mal wiederholt wird.

8. Verfahren nach einem der vorhergehenden Ansprüche, wobei das Polymer nach dem Behandlungsschritt getrocknet und granuliert wird.

9. Verfahren nach Anspruch 8, wobei PETG-Granulat 5-24 Stunden lang im Vakuum in einem Bereich von 15-1 hPa bei einer Temperatur erwärmt wird, die um 10-15 °C niedriger ist als die Schmelztemperatur des Polymers.

10. Verfahren nach Anspruch 8, wobei PETG-Granulat bei einer Temperatur erwärmt wird, die um 10-15 °C höher ist als die Schmelztemperatur des Polymers und mit einem Addukt einer Epoxid-Peroxid-Kohlenstoffnanoröhre vermischt wird, wobei das Addukt durch die Formel (I) dargestellt wird.

## Revendications

1. Procédé pour récupérer un polymère à partir de substrats imprimés de polyéthylène téréphtalate (PETG) modifié par le diméthyl-cyclohexyl-glycol, comprenant les étapes consistant à :
- fournir un substrat de PETG imprimé, la couche d'impression comprenant des pigments et/ou colorants dispersés dans une matrice de liant ;
- découper le substrat en bandes irrégulières ; et
- traiter le substrat découpé avec une composition de traitement ;
- la composition de traitement étant un azéotrope aqueux de faible poids moléculaire organique, un solvant polaire sélectionné dans le groupe comprenant : cétones, aldéhydes, alcools et esters.

2. Procédé selon la revendication 1, dans lequel le solvant est un aliphatique ayant de 1 à 7 atomes de carbone dans chaque groupement alkyle.

3. Procédé selon la revendication 2, dans lequel le solvant est sélectionné dans le groupe comprenant : acétone, éthanol, propanol, méthyl-éthyl-cétone et acétate d'éthyle.

4. Procédé selon la revendication 1, dans lequel les bandes ont une largeur ne dépassant pas 5 cm.

5. Procédé selon l'une quelconque des revendications précédentes, dans lequel le procédé de traitement a lieu à la température ambiante.

6. Procédé selon l'une quelconque des revendications précédentes, dans lequel l'étape de traitement a lieu pendant 20 minutes.

7. Procédé selon l'une quelconque des revendications précédentes, dans lequel l'étape de traitement est répétée de 3 à 5 fois.

8. Procédé selon l'une quelconque des revendications précédentes, dans lequel le polymère est séché et granulé après l'étape de traitement.

9. Procédé selon la revendication 8, dans lequel le granulé de PETG est chauffé à une température inférieure de 10-15°C à la température de fusion du polymère pendant 5-24 heures, dans un vide de 15 à 1 hPa.

10. Procédé selon la revendication 8, dans lequel le granulé de PETG est chauffé à une température supérieure de 10-15°C à la température de fusion du polymère et mélangé avec un adduit de nanotube de carbone au peroxyde d'époxy, l'adduit étant représenté par la formule (I).
